# EUROPÄISCHE PATENTSCHRIFT

(11) **EP 0 789 290 B1**
(45) Veröffentlichungstag und Bekanntmachung des Hinweises auf die Patenterteilung: **26.04.2000**
(21) Anmeldenummer: 97101141.6
(22) Anmeldetag: 24.01.1997
(51) Int. Cl.: G05B 23/02, G21C 17/00

(54) **System und Verfahren zur Überwachung einer technischen Anlage**
Method and system for the monitoring of a technical installation
Méthode et système de surveillance d'une installation technique

(30) Priorität: 06.02.1996 DE 19604277
(43) Veröffentlichungstag der Anmeldung: 13.08.1997
(73) Patentinhaber: SIEMENS AKTIENGESELLSCHAFT, 80333 München (DE)
(72) Erfinder: Mederer, Hans-Gerd, Dipl.-Phys, 91052 Erlangen (DE); Büttner, Peter, Dipl.-Ing., 90766 Fürth (DE)

(56) Entgegenhaltungen:
- EP-A- 0 393 368
- EP-A- 0 434 050
- FR-A- 2 706 062

## Beschreibung

Die Erfindung bezieht sich auf ein Überwachungssystem für eine technische Anlage, insbesondere für eine Kraftwerksanlage. Sie betrifft weiterhin ein Verfahren zur Überwachung einer derartigen Anlage.

In einer Leitwarte zur Steuerung einer technischen Anlage, insbesondere einer Kraftwerksanlage, fallen ständig große Mengen verschiedener Meßdaten an, die in ihrer Gesamtheit den Anlagen- oder Betriebszustand beschreiben. Das Bedienpersonal der Anlage steht vor der Aufgabe, die für den Betriebszustand jeweils relevanten Meßdaten oder Meßgrößen zu identifizieren und ihre Werte in bezug auf den Zustand der Anlage zu verfolgen, zu analysieren und zu interpretieren. Dabei ist die Prozeßführung der Leitwarte über Bildschirme durch Normen und Richtlinien in Form von Vorschriften weitgehend festgelegt. Diese Vorschriften umfassen Symbole für Anlagenteile oder Anlagenelemente, wie z.B. Pumpen und Ventile, und die Farbgebung von Anzeigen sowie den Aufbau der Anzeigen eines Leitsystems. Zusätzlich zu den verschiedenen Anzeigen ist üblicherweise ein Anlagenschaltbild vorhanden, das die gesamte Anlage im Überblick darstellt.

Mit zunehmender Automatisierung und Komplexität einer derartigen technischen Anlage nimmt die Anzahl der erfaßten Meßdaten und damit die Wahrscheinlichkeit zu, daß die für den jeweiligen Betriebszustand der Anlage wichtigen Informationen nicht als solche frühzeitig identifiziert werden. Entsprechende Gegenmaßnahmen können somit erst verspätet eingeleitet werden.

Der Erfindung liegt daher die Aufgabe zugrunde, ein Überwachungssystem für eine technische Anlage, insbesondere für eine Kraftwerksanlage, anzugeben, mit dem Besonderheiten im Anlagenprozeß unmittelbar aufgezeigt und frühzeitige Gegenmaßnahmen, insbesondere bei Störungen, ermöglicht werden. Des weiteren soll ein Verfahren zur Überwachung einer technischen Anlage angegeben werden, mit dem Besonderheiten im Anlagenprozeß für das Bedienpersonal besonders zuverlässig erkennbar gemacht werden.

Bezüglich des Überwachungssystems wird die genannte Aufgabe erfindungsgemäß gelöst, indem sowohl für einen Istzustand als auch für einen Sollzustand der Anlage jeweils eine Durchsatzbilanz für ein in der Anlage geführtes Medium als Medienstrompfeil gemeinsam graphisch darstellbar sind, wobei in jeden Medienstrompfeil Medienzuflüsse repräsentierende Teilstrompfeile einmünden und von jedem Medienstrompfeil Medienabflüsse repräsentierende Teilstrompfeile abzweigen, und wobei die darzustellende Breite jedes Strompfeiles ein Maß für den jeweiligen Medienstrom ist.

Die Erfindung geht dabei von der Überlegung aus, daß der Anlagenprozeß besonders zuverlässig überwachbar ist, indem dem Bedienpersonal vorverarbeitete, für eine Bestimmung des Anlagenzustandes wesentliche. Informationen zur Verfügung gestellt werden, wobei irrelevante Informationen unterdrückt sind. Dazu können insbesondere die in großer Anzahl erfaßten den Anlagenprozeß charakterisierenden Informationen in geeigneter Weise verdichtet werden. Eine für das Bedienpersonal besonders einfach zu erfassende Informationsverdichtung ist dabei die Zusammenfassung einer großen Anzahl von Informationen, die ein in der Anlage geführtes Medium betreffen, zu einer gemeinsamen Darstellung in Form eines Medienstrompfeils. Darstellbare Medienflüsse sind dabei beispielsweise Wärme-, Energie- oder Kühlwasserströme.

Jeder Medienstrompfeil ist zur Darstellung einer Durchsatzbilanz in der Art eines Sankey-Diagramms aufgebaut. Dabei münden in den Medienstrompfeil Medienzuflüsse repräsentierende Teilstrompfeile ein, und es zweigen von ihm Medienabflüsse repräsentierende Teilstrompfeile ab. Durch jeden Medienstrompfeil wird dem Bedienpersonal auf der Grundlage einer großen Anzahl von das jeweilige Medium betreffenden Informationen lediglich eine für den Anlagenzustand wesentliche Aussage vermittelt, nämlich welche Beiträge des jeweiligen Medienstroms von welchen Quellen herrühren, und in welche Teilströme sich der Medienstrom aufteilt. Eine quantitative Aussage ist dabei erreicht, indem die Breite jedes Strompfeiles ein Maß für den jeweils zugrundeliegenden Medienfluß ist. Eine gemeinsame Darstellung eines ersten, den Anlagen-Istzustand repräsentierenden Medienstrompfeils und eines zweiten, einen Anlagen-Sollzustand repräsentierenden Medienstrompfeils betont dabei in für das Bedienpersonal besonders leicht interpretierbarer Weise Abweichungen zwischen dem Anlagen-Istzustand und dem Anlagen-Sollzustand. Die Darstellung ist somit besonders für Diagnosezwecke geeignet.

Ein durch die Darstellung repräsentierter Teilbereich der Anlage ist dabei vorteilhafterweise vorgebbar. So kann beispielsweise der gesamte Wasser-Dampf-Kreislauf einer Dampfkraftanlage mit allen Wasser- und Dampf-Zuflüssen und allen Wasser- und Dampfabflüssen oder auch nur der Wasser-Dampf-Durchsatz durch den Kondensator der Dampfkraftanlage mit dessen Zu- und Abflüssen dargestellt werden.

Für eine besonders deutlich erkennbare Abweichung des Ist-Anlagenzustands vom Soll-Anlagenzustand überdecken die den Istzustand repräsentierenden Strompfeile bei ihrer Darstellung die jeweiligen den analogen Medienstrom oder Medienteilstrom des Sollzustands repräsentierenden Strompfeile vorteilhafterweise mindestens teilweise. Durch eine derartige Darstellung und eine geeignete Verschiebung der Verzweigungen der Teilstrompfeile ist ein annähernd dreidimensionaler und somit für das Bedienpersonal besonders prägnanter Darstellungseffekt erreichbar.

Um dem Bedienpersonal eine quantitative Abschätzung des Anteils der jeweiligen Medienzu- oder -abflüsse am Gesamtmedienstrom in besonders einfacher Weise zu ermöglichen, entspricht vorteilhafterweise die Breite jedes Medienstrompfeils einem normierten Gesamtstrom von 100 Prozent. Dabei ist die Breite jedes in diesen einmündenden oder von diesem abzweigenden Teilstrompfeils an den prozentualen Anteil des jeweils zugrundeliegenden Medienzu- bzw. -abflusses am Gesamtstrom angepaßt. In alternativer Ausgestaltung ist die Breite jedes Strompfeiles ein Maß für den Absolutwert des zugrundeliegenden Medienstroms. In jedem Fall ist zweckmäßigerweise ein Zahlenwert jedes Medienstroms gemeinsam mit dem diesem zugeordneten Strompfeil darstellbar.

Bezüglich des Verfahrens wird die genannte Aufgabe gelost, indem sowohl für einen Istzustand als auch für einen Sollzustand der Anlage jeweils eine Durchsatzbilanz für ein in der Anlage geführtes Medium als Medienstrompfeil gemeinsam graphisch dargestellt werden, wobei in jeden Medienstrompfeil Medienzuflüsse repräsentierende Teilstrompfeile einmünden und von jedem Medienstrom-pfeil Medienabflüsse repräsentierende Teilstrompfeile abzweigen, und wobei die darzustellende Breite jedes Strompfeiles ein Maß für den jeweiligen Medienstrom ist.

Ein Ausführungsbeispiel der Erfindung wird anhand einer Zeichnung näher erläutert. Darin zeigen:
- Figur 1: ein Funktionsschema eines Überwachungssystems einer technischen Anlage, und
- Figur 2: einen einen Istzustand und einen einen Sollzustand der technischen Anlage repräsentierenden Medienstrompfeil.

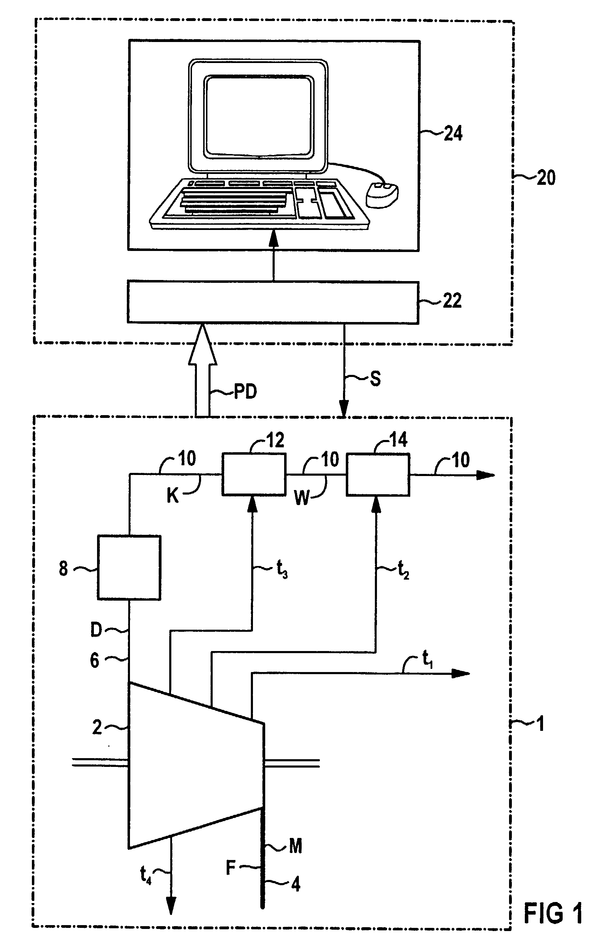

Der im Ausführungsbeispiel gemäß Figur 1 schematisch dargestellte Prozeßablauf innerhalb einer Anlagenkomponente 1 ist Teil des Gesamtprozesses einer Kraftwerksanlage. Die Kraftwerksanlage umfaßt dabei eine Dampfturbine 2, die eingangsseitig über eine Frischdampfleitung 4 mit einem (nicht dargestellten) Dampferzeuger und ausgangsseitig über eine Abdampfleitung 6 mit einem Kondensator 8 verbunden ist. Der Kondensator 8 ist seinerseits ausgangsseitig über eine Kondensatleitung 10, in die ein Speisewasserbehälter 12 und eine Vorwärmstrecke 14 geschaltet sind, an den Dampferzeuger angeschlossen, so daß ein geschlossener Wasser-Dampf-Kreislauf entsteht.

Beim Betrieb der Kraftwerksanlage wird im Dampferzeuger erzeugter Frischdampf F der Dampfturbine 2 zugeführt, wo er sich arbeitsleistend entspannt. Der entspannte Dampf D wird dem Kondensator 8 zugeleitet und kondensiert dort. Das Kondensat K gelangt in den Speisewasserbehälter 12, von dem aus es als Speisewasser W in der Vorwärmstrecke 14 vorgewärmt und sodann wiederum dem Dampferzeuger zugeführt wird.

Abhängig vom Lastzustand der Kraftwerksanlage teilt sich der der Dampfturbine 2 zugeführte und dort teilentspannte Frischdampf F in eine Anzahl von Teilströmen t₁, t₂, t₃, t₄ auf, von denen jeder einer spezifischen Verwendung zugeführt wird. Ein erster Teilstrom t₁ wird einem im Dampferzeuger angeordneten Zwischenüberhitzer zugeführt, dort überhitzt und sodann in eine Mitteldruckstufe der Dampfturbine 2 zurückgeleitet. Ein zweiter Teilstrom t₂ wird der Vorwärmstrecke 14 zugeführt und dort zur Vorwärmung des Speisewassers W herangezogen. Ein dritter Teilstrom t₃ wird als Stützdampf dem Speisewasserbehälter 12 zugeführt, und ein vierter Teilstrom t4 steht als Hilfsdampf zur Verfügung.

Bei Vollast der Kraftwerksanlage wird annähernd der Gesamtstrom des Frischdampfes F dem Zwischenüberhitzer zugeführt und gelangt dann in die Dampfturbine 2. Im Gegensatz dazu wird der Gesamtstrom des Frischdampfes F bei einem Lastzustand von etwa 20 % der Nennlast, also beispielsweise während des Anfahrens der Kraftwerksanlage, derart in die vier Teilströme t₁, t₂, t₃, t₄ aufgespalten, daß der erste Teilstrom t₁ etwa 60 % des Gesamtstromes beträgt, wogegen der zweite Teilstrom t₂ etwa 20 % und der dritte und vierte Teilstrom t₃ bzw. t₄ jeweils etwa 10 % des Gesamtstromes betragen.

Den in der Anlagenkomponente 1 ablaufenden Prozeß, also insbesondere die Aufteilung des Frischdampfes F, betreffende Informationen werden als Prozeßdaten PD dem Überwachungssystem 20 der Kraftwerksanlage zugeführt. In einem Automatisierungs- und Informationssystem 22 werden die Prozeßdaten PD vorverarbeitet. Vom Automatisierungs- und Informationssystem 22 werden gegebenenfalls Steuersignale S an die Anlagenkomponente 1 abgegeben. Durch die innerhalb des Automatisierungs- und Informationssystems 22 ablaufenden Prozesse wird die Kraftwerksanlage mit ihren Anlagenteilen und der Anlagenkomponente 1 automatisch gesteuert. Den Anlagenprozeß betreffende Informationen werden auf einer an das Automatisierungs- und Informationssystem 22 angeschlossenen Anzeigeeinheit 24 des Überwachungssystems 20 angezeigt.

Um dem Bedienpersonal eine schnelle Erfassung des Anlagenzustands zu ermöglichen, sind die Informationen bei ihrer Darstellung auf der Anzeigeeinheit 24 des Überwachungssystems 22 komprimiert oder verdichtet. Für eine derartige Komprimierung ist der Anlagenzustand anhand von Medienflüssen der in der Kraftwerksanlage geführten Medien wie beispielsweise Wärme, Energie, Speisewasser oder Dampfmassenstrom darstellbar. Für jedes in der Kraftwerksanlage geführte Medium ist dabei der Medienfluß in der Art unterschiedlicher Vergrößerungsstufen für die Gesamtanlage, für auswählbare Gruppen von Anlagenkomponenten oder auch für einzelne auswählbare Anlagenkomponenten darstellbar. Im Ausführungsbeispiel ist der der Dampfturbine 2 zugeführte Frischdampf F ein derartiger Medienfluß.

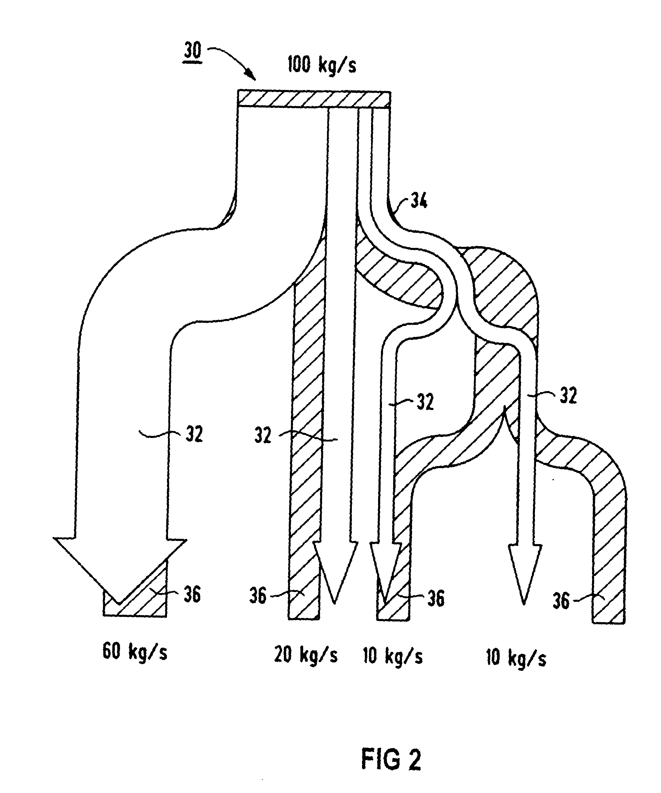

Der betrachtete Medienfluß ist dabei für den Frischdampf F in Figur 2 in der Art einer Durchsatzbilanz als Medienstrompfeil 30 dargestellt. Der Medienstrompfeil 30 repräsentiert die Frischdampfmassenstromdichte in der Frischdampfleitung 4. Vom Medienstrompfeil 30 zweigen Medienabflüsse des Frischdampfmassenstroms repräsentierende Teilstrompfeile 32 ab.

Im Ausführungsbeispiel ist der Medienstrompfeil 30 für den für einen Anfahrvorgang generierten Frischdampf F bei einer Last von etwa 20 % der Nennlast der Kraftwerksanlage gezeigt. Gemäß der oben beschriebenen Verwendung des Frischdampfes F bei einem derartigen Lastzustand verzweigt sich der Medienstrompfeil 30 in vier Teilstrompfeile 32, von denen jeder einen der Teilströme t₁, t₂, t₃, t₄ repräsentiert. Diese teilen sich etwa im Verhältnis 6:2:1:1 auf. Die Breite jedes Strompfeiles 30, 32 ist ein Maß für den jeweils zugrundeliegenden Medienstrom, so daß sich die Breiten der Teilstrompfeile 32 entsprechend der Aufteilung der Teilströme t₁, t₂, t₃, t₄ ebenfalls wie 6:2:1:1 verhalten.

Im dargestellten Fall entstammt der genannte Frischdampfmassenstrom, d.h. der Medienstrompfeil 30, einer einzigen Quelle, nämlich dem Dampferzeuger. Liegen mehrere Frischdampfquellen vor, mündet für jede dieser Quellen ein einen Zufluß zum Medienstrom repräsentierender Teilstrompfeil 32 in den Medienstrompfeil 30 ein.

Durch die Darstellung des Medienstrompfeils 30 ist für das Bedienpersonal eine Durchsatzbilanz des Frischdampfes F besonders einfach ermittelbar. Der Quellenbeitrag und alle Abflußbeiträge sind anhand der sie repräsentierenden Strompfeile 30 bzw. 32 leicht identifizierbar und quantitativ abschätzbar. Somit ist die Vielzahl der in der jeweiligen Anlagenkomponente ermittelten Informationen auf eine für das Bedienpersonal besonders einfach zu erfassende Art komprimiert.

Der Medienstrompfeil 30 wird in vorgebbaren Zeicintervallen anhand von jeweils aktuell ermittelten Meßwerten neu generiert, so daß das Bedienpersonal stets über den aktuellen Anlagenzustand informiert ist. Gemeinsam mit dem Medienstrom-pfeil 30 ist ein weiterer Medienstrompfeil 34 darstellbar, der den Sollzustand der jeweiligen Anlagenkomponente repräsentiert, und der sich ebenfalls für den dargestellten Fall des Frischdampfmassenstroms in vier Teilstrompfeile 36 verzweigt. Anhand von Abweichungen zwischen dem Medienstrompfeil 30 und dem Medienstrompfeil 34 sind Abweichungen des Istzustandes vom Sollzustand somit für das Bedienpersonal besonders leicht erkennbar. Die Medienstrompfeile 30, 34 können dabei jeweils mit oder ohne Pfeilspitze dargestellt sein.

Die den Istzustand repräsentierenden Strompfeile 30, 32 überdecken teilweise die entsprechenden den Sollzustand repräsentierenden Strompfeile 34 bzw. 36. Durch eine Verschiebung der Verzweigungspunkte wird zudem ein dreidimensionaler Darstellungseffekt erreicht. Gemeinsam mit den Strompfeilen 30, 32, 34, 36 ist jeweils ein Zahlenwert dargestellt, der den Absolutwert für den jeweils repräsentierten Medienstrom angibt. Für den Frischdampf F repräsentiert der Medienstrompfeil 30 einen Massenstrom von 100 kg/s. Dieser spaltet sich auf in die vier Massenteilströme 60 kg/s, 20 kg/s und zweimal 10 kg/s, die von den Teilstrompfeilen 32 repräsentiert werden.

Analog zur Bilanz des Frischdampfes F in der Anlagenkomponente 1 kann auch die Bilanz jedes anderen Medienstromes oder Medienflusses der Gesamtanlage oder einer ihrer Anlagenkomponenten auf der Anzeigeeinheit 24 dargestellt werden.

## Patentansprüche

1. Überwachungssystem für eine technische Anlage, bei dem sowohl für einen Istzustand als auch für einen Sollzustand der Anlage jeweils eine Durchsatzbilanz für ein in der Anlage geführtes Medium (F) als Medienstrompfeil (30, 34) gemeinsam graphisch darstellbar sind, wobei in jeden Medienstrompfeil (30, 34) Medienzuflüsse repräsentierende Teilstrompfeile einmünden und von jedem Medienstrompfeil (30, 34) Medienabflüsse repräsentierende Teilstrompfeile (32, 36) abzweigen, und wobei die darzustellende Breite jedes Strompfeiles (30, 32, 34, 36) ein Maß für den jeweiligen Medienstrom ist.

2. Überwachungssystem nach Anspruch 1,
**dadurch gekennzeichnet,** daß die den Istzustand repräsentierenden Strompfeile (30, 32) die entsprechenden den Sollzustand repräsentierenden Strompfeile (34, 36) mindestens teilweise überdecken.

3. Überwachungssystem nach Anspruch 1 oder 2,
**dadurch gekennzeichnet**, daß die Breite jedes Medienstrompfeils (30, 34) einem normierten Gesamtstrom von 100 % entspricht, wobei die Breite jedes in diesen einmündenden oder von diesem abzweigenden Teilstrompfeils (32, 36) an den prozentualen Anteil des jeweils zugrundeliegenden Medienzu- bzw. -abflusses am Gesamtstrom angepaßt ist.

4. Überwachungssystem nach Anspruch 1 oder 2,
**dadurch gekennzeichnet**, daß die Breite jedes Strompfeiles (30, 32, 34, 36) ein Maß für den Absolutwert des zugrundeliegenden Medienstromes ist.

5. Überwachungssystem nach einem der Ansprüche 1 bis 4,
**dadurch gekennzeichnet**, daß ein Zahlenwert jedes Medienstroms gemeinsam mit dem diesem zugeordneten Strompfeil (30, 32, 34, 36) darstellbar ist.

6. Verfahren zur Überwachung einer technischen Anlage, bei dem sowohl für einen Istzustand als auch für einen Sollzustand der Anlage jeweils eine Durchsatzbilanz für ein in der Anlage geführtes Medium (F) als Medienstrompfeil (30, 34) gemeinsam graphisch dargestellt werden, wobei in jeden Medienstrompfeil (30, 34) Medienzuflüsse repräsentierende Teilstrom-pfeile einmünden und jedem Medienstrompfeil (30, 34) Medienabflüsse repräsentierende Teilstrompfeile (32, 36) abzweigen, und wobei die darzustellende Breite jedes Strompfeiles (30, 32, 34, 36) ein Maß für den jeweiligen Medienstrom ist.

## Claims

1. Monitoring system for a technical plant, in which both for an actual condition and for a desired condition of the plant, throughput balances for a medium (F) conveyed in the plant can be displayed graphically together in the form of media stream arrows (30, 34), partial stream arrows representing influxes of media joining each media stream arrow (30, 34) and partial stream arrows (32, 36) representing effluxes of media branching from each media stream arrow (30, 34), the width to be displayed of each stream arrow (30, 32, 34, 36) being a measure of the media stream in question.

2. Monitoring system according to claim 1,
**characterised in that** the stream arrows (30, 32) representing the actual condition at least partly overlap the corresponding stream arrows (34, 36) representing the desired condition.

3. Monitoring system according to claim 1 or 2,
**characterised in that** the width of each media stream arrow (30, 34) corresponds to a standardised total stream of 100 %, the width of each partial stream arrow (32, 36) joining or branching from that total stream being adapted to the percentage content of the underlying media influx or efflux in the total stream.

4. Monitoring system according to claim 1 or 2,
**characterised in that** the width of each stream arrow (30, 32, 34, 36) is a measure of the absolute value of the media stream on which it is based.

5. Monitoring system according to any one of claims 1 to 4,
**characterised in that** a numerical value for each media stream can be displayed together with the stream arrow (30, 32, 34, 36) associated therewith.

6. Process for monitoring a technical plant, in which both for an actual condition and for a desired condition of the plant, throughput balances for a medium (F) conveyed in the plant can be displayed graphically together in the form of media stream arrows (30, 34), partial stream arrows representing influxes of media joining each media stream arrow (30, 34) and partial stream arrows (32, 36) representing effluxes of media branching from each media stream arrow (30, 34), the width to be displayed of each stream arrow (30, 32, 34, 36) being a measure of the media stream in question.

## Revendications

1. Système de surveillance pour une installation technique, dans lequel on peut représenter graphiquement conjointement comme flèche (30, 34) de courant de fluide, à la fois pour un état réel et pour un état de consigne de l'installation, un bilan de débit pour un fluide (F) passant dans l'installation, des flèches de sous-courant représentant des afflux de fluide affluant dans chaque flèche (30, 34) de courant de fluide et des flèches (32, 36) de sous-courant représentant des courants de fluide partant de chaque flèche (30, 34) de courant de fluide, et la largeur représentée de chaque flèche (30, 32, 34, 36) de courant étant une mesure du courant de fluide associé.

2. Système de surveillance suivant la revendication 1, caractérisé en ce que les flèches (30, 32) de courant représentant l'état réel recouvrent au moins partiellement les flèches (34, 36) de courant correspondantes représentant l'état de consigne.

3. Système de surveillance suivant la revendication 1 ou 2, caractérisé en ce que la largeur de chaque flèche (30, 34) de courant de fluide correspond à un courant total normé de 100 %, la largeur de chaque flèche (32, 36) de sous-courant y débouchant ou en partant étant adaptée à la proportion du fluide qui afflue ou qui part qui en est à la base, en pourcentage du courant total.

4. Système de surveillance suivant la revendication 1 ou 2, caractérisé en ce que la largeur de chaque flèche (30, 32, 34, 36) de courant est une mesure de la valeur absolue du courant de fluide qui en est à la base.

5. Système de surveillance suivant l'une des revendications 1 à 4, caractérisé en ce qu'il peut être représenté une valeur numérique de chaque courant de fluide conjointement avec la flèche (30, 32, 34, 36) de courant qui lui est associée.

6. Procédé de surveillance d'une installation technique, dans lequel on représente graphiquement conjointement comme flèche (30, 34) de courant de fluide, à la fois pour un état réel et pour un état de consigne de l'installation, chaque fois un bilan de débit pour un fluide (F) passant dans l'installation, des flèches de sous-courant représentant des afflux de fluide affluant dans chaque flèche (30, 34) de courant de fluide et des flèches (32, 36) de sous-courant représentant des courants de fluide qui partent de chaque flèche (30, 34) de courant de fluide, et la largeur à représenter de chaque flèche (30, 32, 34, 36) de courant étant une mesure du courant de fluide associé.
